# EUROPÄISCHE PATENTSCHRIFT

(11) **EP 1 150 811 B1**
(45) Veröffentlichungstag und Bekanntmachung des Hinweises auf die Patenterteilung: **06.10.2004**
(21) Anmeldenummer: 00905232.5
(22) Anmeldetag: 08.02.2000
(51) Int. Cl.: B27B 5/075, B23Q 39/02

(54) **BEARBEITUNGSEINRICHTUNG FÜR PLATTENFÖRMIGE WERKSTÜCKE**
TREATMENT DEVICE FOR PANEL-SHAPED WORK PIECES
DISPOSITIF D'USINAGE POUR PIECES SOUS FORME DE PLAQUE

(30) Priorität: 10.02.1999 AT 17699
(43) Veröffentlichungstag der Anmeldung: 07.11.2001
(73) Patentinhaber: Panhans, Anton Karl Hermann, 72488 Sigmaringen (DE); Panhans, Wolfgang, 72488 Sigmaringen (DE)
(72) Erfinder: Panhans, Anton Karl Hermann, 72488 Sigmaringen (DE); Panhans, Wolfgang, 72488 Sigmaringen (DE)
(74) Vertreter: Secklehner, Günter, Dr.
(86) Internationale Anmeldenummer: PCT/IB2000/000230
(87) Internationale Veröffentlichungsnummer: WO 2000/047377

(56) Entgegenhaltungen:
- WO-A-92/12816
- AT-B- 402 704
- AT-U- 1 961
- DE-A- 2 458 330
- DE-A- 3 522 278
- DE-A- 4 111 873
- DE-A- 19 518 654

## Beschreibung

Die Erfindung betrifft eine Bearbeitungseinrichtung wie im Oberbegriff des Anspruches 1 beschrieben.

Aus der AT 001 961 U1 ist eine Bearbeitungseinrichtung für plattenförmige Werkstücke, insbesondere eine Plattenaufteilsäge bekannt. Diese Bearbeitungseinrichtung ist mit einem, eine Auflagefläche für die Werkstücke ausbildenden Maschinengestell und mit einer Niederhalteeinrichtung zum Spannen des zwischen der Auflagefläche und einer Spannfläche eines Druckbalkens befindlichen Werkstückes und mit einem zumindest senkrecht zur Auflagefläche oder zur Spannfläche verstellbaren Bearbeitungsaggregat versehen. Mit dieser Bearbeitungseinrichtung können nunmehr plattenförmige Werkstücke, die auf einer Auflagefläche des Maschinentisches und gegen diese gespannt sind, je nach der gewählten Werkzeugbestückung der Bearbeitungseinrichtung von ihrer der Auflagefläche zugewandten Unterseite ausgehend bearbeitet werden. Nachteilig bei dieser Bearbeitungseinrichtung ist, daß bei einem Wechsel der Bearbeitungsart die Bearbeitungseinrichtung hinsichtlich des zu verwendenden Werkzeuges umgerüstet werden muß, wozu auch vielfach neue Parameter für die Steuerung festzulegen und einzugeben sind und damit die Flexibilität einer derartigen Bearbeitungseinrichtung beeinträchtigt ist und ein höherer Kostenfaktor bei der Bearbeitung der Werkstücke auftritt.

Aufgabe der Erfindung ist es, eine Bearbeitungseinrichtung zu schaffen, die eine rasche Aufeinanderfolge von zumindest zwei voneinander unterschiedlichen Bearbeitungsschritten ohne aufwendiges Umrüsten ermöglicht und mit der ein hoher Qualitätsstandard bei der Bearbeitung plattenförmiger Werkstücke erreicht wird.

Diese Aufgabe der Erfindung wird durch die im Kennzeichenteil des Anspruches 1 wiedergegebenen Merkmale erreicht. Der überraschende Vorteil dabei ist, daß durch die Ausrüstung eines als Laufwagen ausgebildeten Vorrichtungsträger mit zumindest zwei auf diesem angeordneten unabhängig voneinander verstellbaren Bearbeitungsvorrichtungen ein, zumindest zwischen zwei unterschiedlichen Bearbeitungsarten wählbares Bearbeiten ohne Rüstaufwand möglich ist, womit auch automatische Programmabläufe erreicht werden und durch die bevorzugte Ausstattung von Höhenstelleinrichtungen mit Wegemeßsystemen eine hohe Verarbeitungsqualität wie auch eine Unterteilung der Bearbeitung in aufeinanderfolgend ablaufende Arbeitsschritte erreicht wird.

Von Vorteil ist aber auch eine Ausbildung nach Anspruch 2, wodurch mit unterschiedlichen Bearbeitungsvorrichtungen bestückte Vorrichtungsträger als Umrüstmodule für sich ändernde Einsatzbedingungen kostengünstig bereitgehalten werden können.

Möglich ist aber auch eine Ausbildung nach Anspruch 3, weil damit einfache und marktgängige und damit kostengünstig zu beschaffende Antriebe vorliegen.

Eine weitere vorteilhafte Ausbildung beschreibt Anspruch 4, wodurch Bauelemente eingespart werden.

Weiters ist eine Ausbildung nach Anspruch 5 von Vorteil, wodurch eine Modulbauweise erreicht wird, die eine Gestaltung unterschiedlicher Typen von Bearbeitungseinrichtungen erleichtert, z.B. ausgelegt für unterschiedliche Leistungen.

Möglich ist auch eine Ausbildung nach Anspruch 6, wodurch auch Mehrfachverstellungen erreicht werden, durch die raschere Bearbeitungsabläufe möglich sind.

Es sind aber auch vorteilhafte Weiterbildungen, wie in den Ansprüchen 7 und 8 beschrieben, möglich, womit mehrere Arten rotierender Werkzeuge für die unterschiedlichsten Bearbeitungsvorgänge einsetzbar sind.

Eine Ausbildung, wie im Anspruch 9 beschrieben, sichert eine hohe Qualität der Führung der Bearbeitungsvorrichtungen bzw. der Laufwagen.

Eine vorteilhafte Weiterbildung beschreibt auch Anspruch 10, weil damit eine hohe Belastbarkeit der Führungsanordnung bei geringem Wartungsaufwand erreicht wird.

Nach einer bevorzugten Ausbildung, wie im Anspruch 11 beschrieben, wird eine kompakte Bauweise unter Einsparung von Bauelementen erzielt.

Durch die vorteilhafte Weiterbildung, wie im Anspruch 12 beschrieben, wird der Anwendungsbereich der Bearbeitungseinrichtung erweitert und eine Werkstückbearbeitung sowohl von der Unterseite wie auch von der Oberseite ermöglicht, wodurch ein zeitaufwendiges und die Bearbeitungsqualität beeinträchtigendes Wenden der plattenförmigen Werkstücke entfällt.

Dabei ist eine Ausbildung nach Anspruch 13 von Vorteil, weil in dieser Bauweise das Maschinengestell als Rahmen ausgebildet eine hohe Seitenstabilität zur Aufnahme der durch die Vorrichtungsbewegungen hervorgerufenen Reaktionskräfte aufweist.

Vorteilhaft sind dabei auch Ausbildungen nach den Ansprüchen 14 und 15, weil damit eine exakte und über Ablaufprogramme vorgebbare Bearbeitung der Werkstükke ermöglicht wird.

Es ist aber auch eine Ausbildung nach Anspruch 16 von Vorteil, wodurch die Bearbeitung mit Schaftwerkzeugen für allseitig senkrecht begrenzte Innenkonturen möglich ist.

Eine Ausbildung, wie im Anspruch 17 beschrieben, ermöglicht eine von der Steuerung unabhängige Synchronisation der Bearbeitungseinrichtung.

Möglich ist aber auch eine Ausbildung nach Anspruch 18, mit der eine hohe Flexibilität bei der Ablauffestlegung für die Bearbeitung der Werkstücke erreicht wird.

Gemäß der im Anspruch 19 gekennzeichneten Ausführung wird eine zeitsparende Aufeinanderfolge unterschiedlicher oder nacheinander abzuwickelnder Bearbeitungsschritte ermöglicht.

Eine Ausbildung, wie im Anspruch 20 beschrieben, ermöglicht eine sehr exakte und automatische Anpassung bzw. programmäßige Festlegung der Bearbeitungstiefe in Abhängigkeit von der Werkstückdicke und Berücksichtigung von Deckbelägen wie Kartonlagen, Furniere etc.

Schließlich sind auch Ausbildungen nach den Ansprüchen 21 und 22 vorteilhaft, wodurch viele Varianten möglicher Antriebselemente zur Auswahl stehen.

Die Erfindung wird im nachfolgenden anhand der in den Zeichnungen dargestellten Ausführungsbeispiele näher erläutert.

Es zeigen:
- Fig. 1: eine erfindungsgemäße Bearbeitungseinrichtung in Ansicht, teilweise geschnitten;
- Fig. 2: die erfindungsgemäße Bearbeitungseinrichtung geschnitten gemäß den Linien II - II in Fig. 1;
- Fig. 3: eine weitere Ausbildung der erfindungsgemäßen Bearbeitungseinrichtung in Ansicht, teilweise geschnitten;
- Fig. 4: ein Bearbeitungsschritt an einem Werkstück mit der erfindungsgemäßen Bearbeitungseinrichtung;
- Fig. 5: ein weiterer Bearbeitungsschritt an einem Werkstück mit der erfindungsgemäßen Bearbeitungseinrichtung;
- Fig. 6: ein weiterer Bearbeitungsschritt an dem Werkstück mit der erfindungsgemäßen Bearbeitungseinrichtung;
- Fig. 7: ein Fertigprodukt nach erfolgter Bearbeitung mit der erfindungsgemäßen Bearbeitungseinrichtung;

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

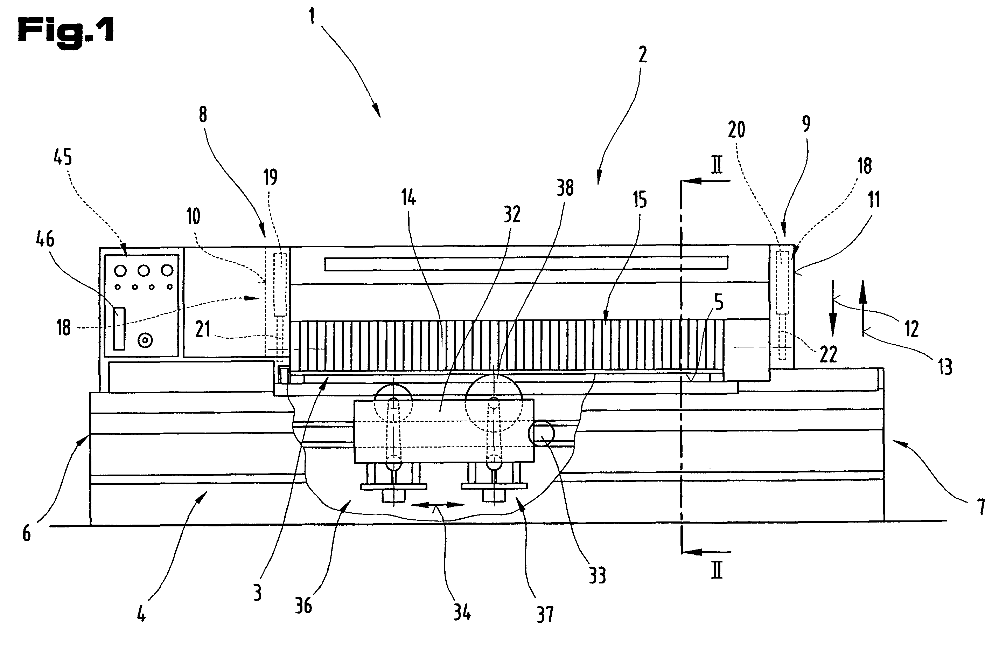

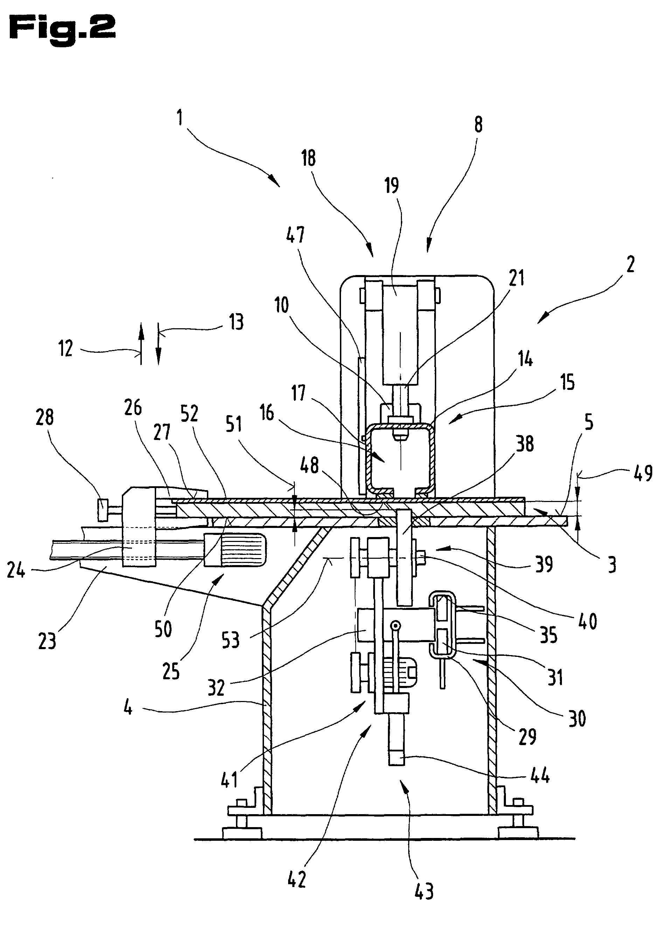

In den Fig. 1 und 2 ist eine Bearbeitungseinrichtung 1 für mit Bearbeitungsaggregaten 2 die Säge- und/oder Fräsbearbeitung bevorzugt plattenförmiger Werkstücke 3 gezeigt. Ein Maschinengestell 4 bildet dabei eine tischförmige Auflagefläche 5 für die zu bearbeitenden Werkstücke 3 aus. An gegenüberliegenden Stirnendbereichen 6, 7 des Maschinengestells 4 sind in senkrechter Richtung erstreckende, die Auflagefläche 5 überragende und durch Profile gebildete Druckbalkentürme 8, 9 angeordnet. Führungsanordnungen 10, 11 der Druckbalkentürme 8, 9 lagern einen in zur Auflagefläche 5 senkrechter Richtung, insbesondere einen in Schließrichtung - gemäß Pfeil 12 - und in Öffnungnungsrichtung - gemäß Pfeil 13 - verstellbaren Druckbalken 14 einer Niederhalteeinrichtung 15 für das Werkstück 3. Eine schlitzförmige Öffnung 16 eines in etwa C-förmigen und den Druckbalken 14 bildenden Profils 17 ist dabei dem Werkstück 3 zugewandt. Verstellantriebe 18, z.B. druckmittelbeaufschlagbare Zylinder 19, 20, stützen sich an den Druckbalkentürmen 8, 9 ab und sind für die Verstellung des Druckbalkens 14 der Niederhalteeinrichtung 15 mit diesem über Kolbenstangen 21, 22 der Zylinder 19, 20 bewegungsverbunden.

Selbstverständlich sind als Verstellantriebe 18 für den Druckbalken 14 auch elektromotorisch betriebene Spindelantriebe, Linearmotorantriebe, etc. einsetzbar oder die Druckbalkentürme 8, 9 selbst sind mit einem diese verbindenen Druckbalken 14 am Maschinengestell 4 in bezug auf die Auflagefläche 5 senkrecht verstellbar gelagert.

Am Maschinengestell 4 ist mit der Auflagefläche 5 in etwa fluchtend eine Stütz- und Führungsanordnung 23 vorgesehen, die einen Schieber 24 verstellbar lagert, der über eine Antriebsvorrichtung 25 in einer zur Ebene der Aufstandsfläche 5 parallel verlaufenden Ebene und zur Längserstreckung der Bearbeitungseinrichtung 1 senkrecht verlaufenden Richtung verstellbar ist. Mit dem Schieber 24 bewegungsfest verbunden sind in Längsrichtung der Bearbeitungseinrichtung 1 zueinander beabstandete, z.B. druckluftbetätigbare Spannzangen 26, angeordnet, mittels der das Werkstück 3 entlang einer Längsseitenfläche 27 gespannt und zur Durchführung eines Bearbeitungsvorganges in eine vorgegebene Position bewegbar ist und in dieser Position durch Aufsetzen des Druckbalkens 14 positioniert wird. Nach einer bevorzugten Ausführung sind dabei die Längsseitenfläche 27 in den Spannzangen 26 freigestellt, d.h., in den Spannzangen 26 nicht anliegend, um damit auch plattenförmige Werkstücke 3 spannen zu können, bei denen z.B. Deckflächenbeläge wie Kunststoffolien, Furniere etc. einen Überstand aufweisen. Um derartige Werkstücke 3 trotzdem im bezug auf die Längsseitenflächen 27 im bezug auf den Schieber 24 exakt positionieren zu können, sind am Schieber 24 zwischen den in Längsrichtung der Bearbeitungseinrichtung 1 beabstandeten Spannzangen 26 justierbare Anschläge 28 angeordnet, die zwischen den überstehenden Deckbelägen Anschlagflächen für die Längsseitenfläche 27 ausbilden.

Im Maschinengestell 4 ist in Richtung der Längserstreckung der Bearbeitungseinrichtung 1 und in etwa sich zwischen den Stirnendbereichen 6, 7 erstreckend eine bevorzugt durch ein Profil 29 gebildete Höhen- und/oder Seitenführung 30 angeordnet, in der über Laufrollen 31 ein Vorrichtungsträger 32 verfahrbar gelagert ist. Der Vorrichtungsträger 32 wird mittels einer Antriebsvorrichtung 33, z.B. einem Kettentrieb oder einem Direktantrieb, längs der Höhen- und/oder Seitenführung 30 - gemäß einem Doppelpfeil 34 - verfahren, wobei Führungsbahnen 35 des Profils 29 exakt parallel zur Auflagefläche 5 verlaufen.

Am Vorrichtungsträger 32 sind in Richtung der Längserstreckung der Bearbeitungseinrichtung 1 zwei zueinander beabstandete Bearbeitungsvorrichtungen 36, 37 angeordnet. Die Bearbeitungsvorrichtungen 36, 37 sind bevorzugt mit Spanneinrichtungen zur Aufnahme und dem Betrieb von scheibenförmigen Bearbeitungswerkzeugen 38, z.B. Fräser, Sägeblätter, etc. ausgelegt. Eine der Bearbeitungsvorrichtungen 36, 37 ist als Fräsvorrichtung 39 ausgebildet. Die Bearbeitungswerkzeuge 38 sind auf drehbeweglich gelagerten Werkzeugspindeln 40 aufgespannt, die von einem mit diesen antriebsverbundenen Antriebsmotor 41 betrieben werden und die auf einem Trägerelement 42 angeordnet sind, welches über eine Verstelleinrichtung 43, z.B. einem elektromotorisch betriebenen Spindeltrieb, relativ zum Vorrichtungsträger 32 und in einer zur Auflagefläche 5 senkrechten Richtung verstellbar ist. Nach einer bevorzugten Ausführung ist die Verstelleinrichtung 43 mit einer Wegemeßeinrichtung 44 versehen, mittels der das Maß der Verstellung ausgehend von einer Referenzposition permanent ermittelt wird. Nach dieser Ausbildung sind also die Bearbeitungsvorrichtungen 36, 37 unabhängig voneinander und relativ zueinander in ihrer Höhenlage in bezug auf die Auflagefläche 5 verstellbar, wobei die Betätigung der Verstelleinrichtung 43 wie auch die Signale der Wegemeßeinrichtung 44, wie auch die weiteren Abläufe wie Spannen des Werkstückes 3 in den Spannzangen 26, Betätigung der Antriebsvorrichtung 25 des Schiebers 24, Betätigung der Niederhalteeinrichtung 15, Inbetriebnahme der Bearbeitungswerkzeuge 38 etc. ausgehend von einer Kontroll- und/oder Steuereinrichtung 45 angesteuert und überwacht werden. Für die Ablaufsteuerung wird im allgemeinen eine aus dem Stand der Technik bekannte sogenannte freiprogrammierbare Steuerung 46 angewandt, wodurch Änderungen in den Abläufen sehr rasch vorgenommen werden können und damit die Bearbeitungseinrichtung 1 sehr flexibel einsetzbar ist.

Mit der Kontroll- und/oder Steuereinrichtung 45 ist eine weitere mit dem Druckbalken 14 zusammenwirkende Dickenmeßeinrichtung 47 leitungsverbunden. Diese übermittelt Daten über die jeweilige Position des Druckbalkens 14 bzw. einer der Auflagefläche 5 zugewandten Spannfläche 48, ausgehend von einem Referenzwert +/- Null, der sich dann ergibt, wenn die Spannfläche 48 auf der Auflagefläche 5 aufliegt. Ist das Werkstück 3 auf der Auflagefläche 5 durch den Druckbalken 14 für eine Bearbeitung durch die Bearbeitungsvorrichtungen 36, 37 niedergespannt, geht der Kontroll- und/oder Steuereinrichtung 45 von der Dickenmeßeinrichtung 47 ein einer Gesamtdicke 49 des Werkstückes 3 entsprechendes Signal zu. In Verbindung mit der Wegemeßeinrichtung 44 der Verstelleinrichtung 43 kann nunmehr die Bearbeitung des Werkstückes 3 von einer auf der Auflagefläche 5 aufliegenden Unterseite 50, welche wiederum einen Referenzwert +/- Null für den Eingriff des Bearbeitungswerkzeuges 38 darstellt, exakt auf eine vorgegebene Schnittiefe 51 erfolgen. Damit wird z.B. ein Schneid- und/oder Fräsvorgang ermöglicht, mit dem ein mit einem Deckflächenbelag 52 versehenes Werkstück 3, ohne diesen zu durchtrennen, bearbeitet werden kann, wie es für bestimmte Anwendungen vielfach erwünscht ist.

In dem bisher gezeigten Ausführungsbeispiel verläuft eine Mittelachse 53 der Werkzeugspindel 40 parallel zur Auflagefläche 5. Eine derartige Ausbildung eignet sich besonders für, wie bereits oben erwähnt, scheibenförmige Bearbeitungswerkzeuge 38, z.B. Sägeblätter, Fräser etc. Selbstverständlich ist auch die Anordnung von Bearbeitungsvorrichtungen mit um 90 Grad verschwenkter Längsmittelachse der Werkzeuspindel, bei der diese also gegenüber der Aufstandsfläche einen rechten Winkel einnimmt oder auch geneigt verläuft, möglich, wie es unter Umständen bei Verwendung von Fingerfräser, Bohrer etc. zweckmäßig ist.

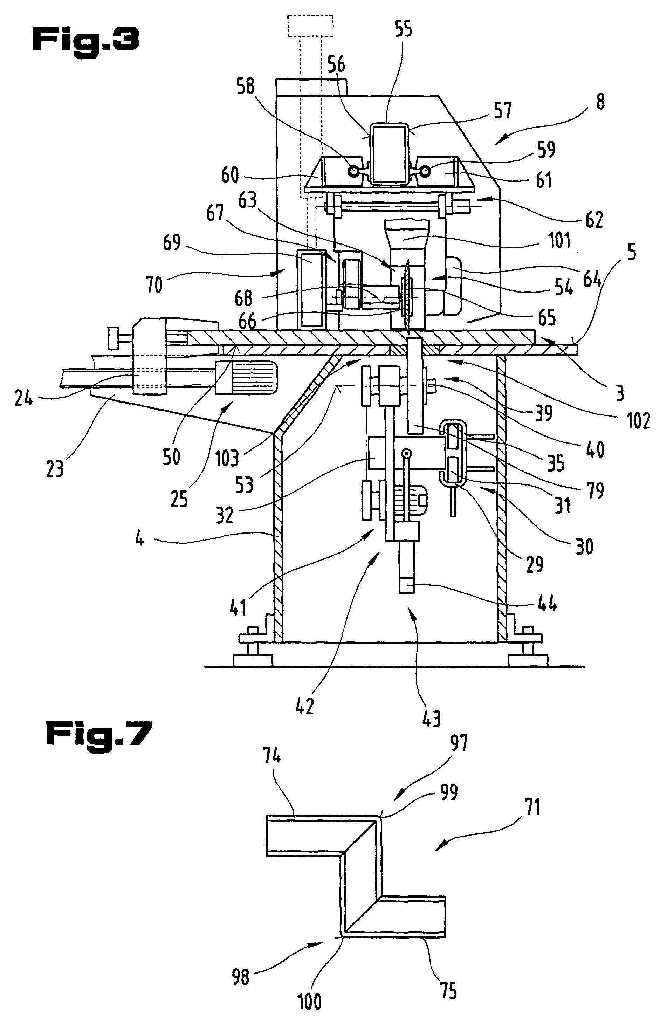

In der Fig. 3 ist eine weitere Ausführung der Bearbeitungsvorrichtung 1 gezeigt. Von der bereits in dem vorhergehenden Figuren beschriebenen Ausführung unterscheidet sich diese durch Anordnung einer weiteren Bearbeitungsvorrichtung 54, die oberhalb der durch das Maschinengestell 4 ausgebildeten Auflagefläche 5 im Bereich zwischen den Druckbalkentürmen 8, also in Richtung der Längserstreckung der Bearbeitungsvorrichtung, verfahrbar angeordnet ist. Zwischen den Druckbalkentürmen 8, 9 und mit diesen bewegungsfest verbunden erstreckt sich ein Tragprofil 55, welches zur Auflagefläche 5 entsprechend beabstandet verläuft, um dazwischen die Bearbeitungsvorrichtung 54 vorzusehen. An entgegengesetzten Seitenflächen 56, 57 des Tragprofils 55 sind Führungsstangen 58, 59 befestigt, auf denen Führungselemente 60, 61 eines Laufwagens 62 zur Aufnahme der Bearbeitungsvorrichtung 54 geführt gelagert sind.

Die Bearbeitungsvorrichtung 54, die auf dem Laufwagen 62 in hängender Anordnung vorgesehen ist, wird bevorzugt durch eine Fräsvorrichtung 63 gebildet und weist einen Antriebsmotor 64 sowie eine drehbar gelagerte Werkzeugspindel 65 zur Aufnahme und zum Spannen eines Fräswerkzeuges 66, sowie eine Antriebsverbindung, z.B. ein Riementrieb 67 zwischen Antriebsmotor 64 und Werkzeugspindel 65, auf. Eine Mittelachse 68 der Werkzeugspindel 65 verläuft parallel zur Auflagefläche 5 und in zur Längserstreckung der Bearbeitungseinrichtung 1 senkrechten Richtung. Der Antriebsmotor 64 mit Spindel und das Werkzeug sind am Laufwagen 62 über eine Stellvorrichtung 69 in zur Auflagefläche 5 senkrechter Richtung verstellbar. Eine mit der Stellvorrichtung 69 zusammenwirkende Meßvorrichtung 70, die mit der Kontroll- und/oder Steuereinrichtung 45 leitungsverbunden ist, liefert Meßsignale, aus denen die Höhenlage des Fräswerkzeuges 66 bzw. der Werkzeugspindel 65 ausgehend von bevorzugt von der Auflagefläche 5 gebildeten Referenzmarke erfaßt wird.

Bevorzugt ist der Aufbau der Bearbeitungseinrichtung 1 mit den im Maschinengestell 4 angeordneten Bearbeitungsvorrichtungen 36, 37 und der oberhalb der Auflagefläche 5 angeordneten Fräsvorrichtung 63 darauf ausgelegt, daß senkrecht zur Auflagefläche 5 verlaufende Bearbeitungsebenen fluchtend verlaufen. Es sind aber durchaus auch Anordnungen möglich, bei denen diese Bearbeitungsebenen versetzt ausgebildet sind.

Die Bearbeitungseinrichtung 1 weist darüber hinaus ausreichend dimensionierte Absaug-, Leitungs- und Sammeleinrichtungen für beim Bearbeiten der Werkstücke 3 entstehenden Staub, Späne etc. auf.

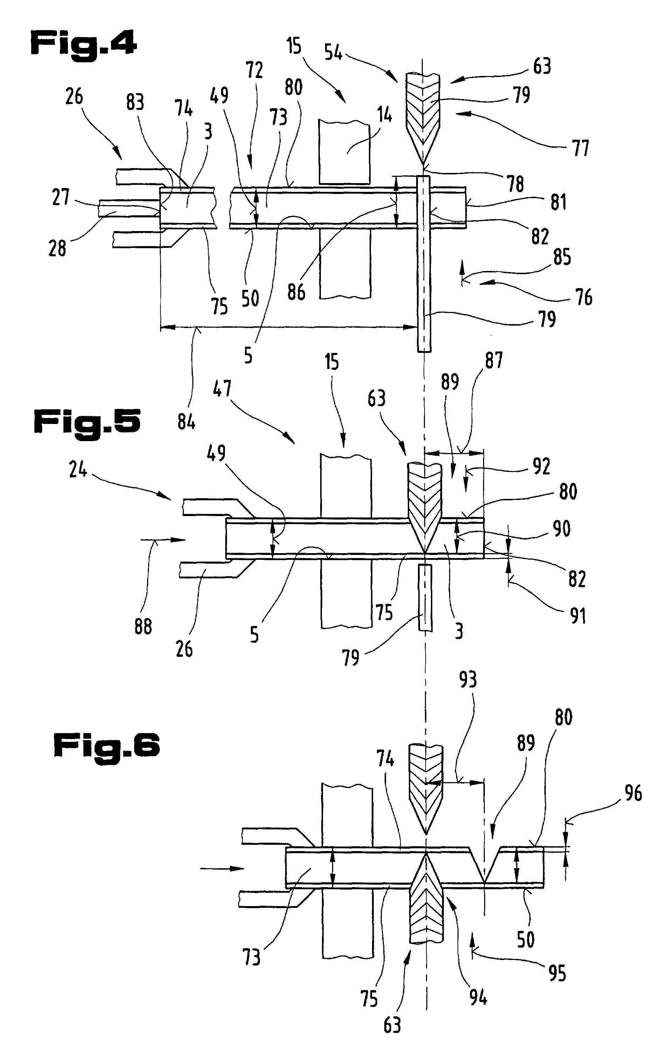

Anhand der im nachfolgenden beschriebenen Fig. 4 bis 7 wird ein Bearbeitungsbeispiel und damit die Funktion der Bearbeitungseinrichtung 1 zur Herstellung eines Fertigproduktes 71 ausgehend von dem plattenförmigen Werkstück 3 erläutert. Bei dem Werkstück 3 handelt es sich beispielsweise um eine Gipskartonplatte 72, bestehend aus einem Kern 73 aus Gips und beidseits aufkaschierten Deckbelägen 74, 75 aus Karton. Die Bearbeitungseinrichtung 1 weist in dem beschriebenen Ausführungsbeispiel die Bearbeitungsvorrichtungen 36, 37 auf, die zur Bearbeitung des Werkstückes 3 ausgehend von der Unterseite 50 angeordnet sind und wovon eine als Sägevorrichtung 76 und eine als Fräsvorrichtung 77 ausgebildet ist und die in einer Bearbeitungsrichtung in einer Bearbeitungsebene 78 fluchtend ausgerichtete Bearbeitungswerkzeuge 79 aufweisen. Weiters ist die Bearbeitungseinrichtung 1 mit der als Fräsvorrichtung 63 ausgebildeten Bearbeitungsvorrichtung 54 zur Bearbeitung des Werkstückes 3 von einer Oberseite 80 her ausgestattet.

In dem in Fig. 4 nun dargestellten Fertigungsschritt I, ist das in den Spannzangen 26 fixierte Werkstück 3 aufliegend auf der Auflagefläche 5 und positioniert mit dem Druckbalken 14 der Niederhalteeinrichtung 15 in bezug auf die Bearbeitungsebene 78 zur Vornahme eines Besäumschnittes mittels der Sägevorrichtung 76 positioniert, wodurch fertigungsbedingte Unreglemäßigkeiten, die an einer Stirnfläche 81 des Werkstückes 3 vorhanden sein können, eliminiert werden und eine Seitenfläche 82 geschaffen wird, die exakt parallel zu einer Anschlagfläche 83 der Anschläge 28 und in einem exakt vorgegebenen Abstand 84 von der an der Anschlagfläche 83 anliegenden Längsseitenfläche 27 beabstandet ist. Zur Durchführung des Besäumschnittes wird die Sägevorrichtung 76 - gemäß Pfeil 85 - auf die Auflagefläche 5 den Deckbelag 74 überragend verstellt, wobei ein Überstand 86 geringfügig größer ist als die Gesamtdicke 49 des Werkstückes 3. Nach dem Verfahren der Sägevorrichtung 76 in Bearbeitungsrichtung ist der Fertigungsschritt I vollzogen.

In Fig. 5 ist der Bearbeitungsschritt II dargestell und erläutert, in dem mit der Fräsvorrichtung 63 eine V-förmige Nut von der Oberseite 80 her in das Werkstück 3 eingefräst wird. Das Werkstück 3 ist dabei um ein Versatzmaß 87 in Richtung eines - Pfeil 88 - mittels des Schiebers 24 und Spannzangen 26 auf der Auflagefläche 5 aufliegend verstellt und mit der Niederhalteeinrichtung 15 gespannt. Die Sägevorrichtung 76 ist abgesenkt, wobei das Bearbeitungswerkzeug 79 die Auflagefläche 5 nicht überragt. Nach dem Absinken der der Oberseite 80 zugewandten Fräsvorrichtung 63 und Verfahren in Bearbeitungsrichtung, wird nunmehr eine V-förmige Nut 89 exakt parallel zur Seitenfläche 82 in das Werkstück 3 eingefräst, wobei eine Tiefe 90 der Nut 89 der Gesamtdicke 49 abzüglich einer Dicke 91 des die Unterseite 50 ausbildenden Deckbelages 75 entspricht und damit der Deckbelag 75 vollständig erhalten bleibt. Eine Verstellung - gemäß Pfeil 92 - der Fräsvorrichtung 63 erfolgt in Abhängigkeit von der von der Dickenmeßeinrichtung 47 der Niederhalteeinrichtung 15 gemessenen Gesamtdicke 49 des Werkstückes 3. Damit ist der Bearbeitungsschritt II vollendet und erfolgt Bearbeitungsschritt III, wie in Fig. 6 dargestellt, bei dem um ein weiteres, vorgegebenes Versatzmaß 93 zur Nut 89 beabstandet eine V-förmige Nut 94 von der Unterseite 50 her in das Werkstück mittels der Fräsvorrichtung 63 gefräst wird. Wie bereits vorhergehend beschrieben, erfolgt auch dabei eine Zustellung - gemäß Pfeil 95 - der Fräsvorrichtung 63 in Abhängigkeit von der Gesamtdicke 49 abzüglich einer Dicke 96 des die Oberseite 80 ausbildenden Deckbelages 74. Damit ist ebenfalls wieder gewährleistet, daß der Deckbelag 74 im Bereich der Nut 94 bestehen bleibt. Damit ist der dritte Bearbeitungsschritt zu dem beschriebenen Beispiel abgeschlossen und das Fertigprodukt 71, wie in der Fig. 7 dargestellt, das ein 2-fach gegengleich um jeweils 90° abgewinkeltes Profil ausbildet und bei dem in Faltungsbereichen 97, 98 die Deckbeläge 74, 75 an Außenkanten 99, 100 ungeschnitten bzw. ungefräst durchlaufend ausgebildet sind.

Es soll noch separat darauf hingewiesen werden, daß vorhergehend nur eine mögliche Bearbeitungsvariante beispielgebend für eine Vielzahl von Möglichkeiten zur Herstellung der unterschiedlichsten Fertigprodukte 71 beschrieben wurde. Auch ist es selbstverständlich anstelle der für die Beschreibung herangezogenen Gipskartonplatten 72 möglich, auch andere Platten z.B aus Holz, Kunststoff mit der Bearbeitungseinrichtung 1 zu bearbeiten.

Die Bearbeitungseinrichtung 1 verfügt weiters über eine Anzahl weiterer aus dem Stand der Technik bekannter Einrichtungen auf die nur zum Teil eingegangen werden soll, wie z.B. eine Absaugeinrichtung 101, wie in Fig. 3. gezeigt, zur Absaugung von Säge- und/oder Frässpänen und Staub etc. sowie natürlich über die erforderlichen Sicherheitseinrichtungen zum Schutz des Bedienungspersonals (Kontaktleisten, Schutzvorhang, Not/Aus- Schalter etc.). Ebenfalls sind der Fig. 3 bekannte Tischeinlagen 102 zu entnehmen, die eine Anpassung des für den Durchtritt des Werkzeuges durch die tischförmigen Auflagefläche 5 erforderlichen Schlitzes 103 an das jeweils in Verwendung stehende Bearbeitungswerkzeug 79 ermöglichen.

Der Ordnung halber sei abschließend darauf hingewiesen, daß in den Figuren zum besseren Verständnis des Aufbaus die Bearbeitungseinrichtung bzw. deren Bestandteile teilweise unmaßstäblich und/oder vergrößert und/oder verkleinert dargestellt wurden.

### Bezugszeichenaufstellung

- 1: Bearbeitungseinrichtung
- 2: Bearbeitungsaggregat
- 3: Werkstück
- 4: Maschinengestell
- 5: Auflagefläche

- 6: Stirnendbereich
- 7: Stirnendbereich
- 8: Druckbalkenturm
- 9: Druckbalkenturm
- 10: Führungsanordnung

- 11: Führungsanordnung
- 12: Pfeil
- 13: Pfeil
- 14: Druckbalken
- 15: Niederhalteeinrichtung

- 16: Öffnung
- 17: Profil
- 18: Verstellantrieb
- 19: Zylinder
- 20: Zylinder

- 21: Kolbenstange
- 22: Kolbenstange
- 23: Stütz- und Führungsanordnung
- 24: Schieber
- 25: Antriebsvorrichtung

- 26: Spannzange
- 27: Längsseitenfläche
- 28: Anschlag
- 29: Profil
- 30: Höhen- und/oder Seitenführung

- 31: Laufrolle
- 32: Vorrichtungsträger
- 33: Antriebsvorrichtung
- 34: Doppelpfeil
- 35: Führungsbahn

- 36: Bearbeitungsvorrichtung
- 37: Bearbeitungsvorrichtung
- 38: Bearbeitungswerkzeug
- 39: Fräsvorrichtung
- 40: Werkzeugspindel

- 41: Antriebsmotor
- 42: Trägerelement
- 43: Verstelleinrichtung
- 44: Wegemeßeinrichtung
- 45: Kontroll- und/oder Steuereinrichtung

- 46: Steuerung (FPS)
- 47: Dickenmeßeinrichtung
- 48: Spannfläche
- 49: Gesamtdicke
- 50: Unterseite

- 51: Schnittiefe
- 52: Deckflächenbelag
- 53: Mittelachse
- 54: Bearbeitungsvorrichtung
- 55: Tragprofil

- 56: Seitenfläche
- 57: Seitenfläche
- 58: Führungsstange
- 59: Führungsstange
- 60: Führungselement

- 61: Führungselement
- 62: Laufwagen
- 63: Fräsvorrichtung
- 64: Antriebsmotor
- 65: Werkzeugspindel

- 66: Fräswerkzeug
- 67: Riementrieb
- 68: Mittelachse
- 69: Stellvorrichtung
- 70: Meßvorrichtung

- 71: Fertigprodukt
- 72: Gipskartonplatte
- 73: Kern
- 74: Deckbelag
- 75: Deckbelag

- 76: Sägevorrichtung
- 77: Fräsvorrichtung
- 78: Bearbeitungsebene
- 79: Bearbeitungswerkzeug
- 80: Oberseite

- 81: Stirnfläche
- 82: Seitenfläche
- 83: Anschlagfläche
- 84: Abstand
- 85: Pfeil

- 86: Überstand
- 87: Versatzmaß
- 88: Pfeil
- 89: Nut
- 90: Tiefe

- 91: Dicke
- 92: Pfeil
- 93: Versatzmaß
- 94: Nut
- 95: Pfeil

- 96: Dicke
- 97: Faltungsbereich
- 98: Faltungsbereich
- 99: Außenkante
- 100: Außenkante

- 101: Absaugeinrichtung
- 102: Tischeinlage
- 103: Schlitz

## Patentansprüche

1. Bearbeitungseinrichtung (1) für plattenförmige Werkstücke (3), insbesondere Plattenaufteilsäge, mit einem eine Auflagefläche (5) für die Werkstücke (3) ausbildenden Maschinengestell (4) und mit einer zur Auflagefläche (5) in senkrechter Richtung verstellbaren Niederhalteeinrichtung (15) und eine mit einer Spannvorrichtung für die Werkstücke (3) versehenen in einer zur Auflagefläche (5) parallel verlaufenden Ebene verstellbaren Vorschubvorrichtung für die Werkstücke (3) und mit zumindest einem im Maschinengestell (4) auf einer Höhen- und/oder Seitenführungsbahn (30) linear verfahrbaren Vorrichtungsträger (32) und einer in zur Auflagefläche (5) senkrechten Richtung auf dem Vorrichtungsträger (32) verstellbar angeordneten Bearbeitungsvorrichtung (36, 37, 54), **dadurch gekennzeichnet, daß** am Vorrichtungsträger (32) zumindest zwei über Verstelleinrichtungen (43) in zur Auflagefläche (5) senkrechten Richtung voneinander unabhängig und relativ zueinander verstellbare Bearbeitungsvorrichtungen (36, 37, 54) angeordnet sind, wovon zumindest eine Bearbeitungsvorrichtung als Fräsvorrichtung (39, 63) ausgebildet ist und die Verstelleinrichtungen (43) für die Bearbeitungsvorrichtungen (36, 37, 54) mit einer Kontroll- und/oder Steuereinrichtung (45) leitungsverbundene Wegemeßeinrichtungen (44) aufweisen.

2. Bearbeitungseinrichtung nach Anspruch 1, **dadurch gekennzeichnet, daß** der Vorrichtungsträger (32) auf einem auf einer Höhen- und/oder Seitenführung (30) verfahrbar angeordneten Laufwagen (62) in zur Auflagefläche (5) senkrechten Richtung über die Verstelleinrichtung (43) verstellbar angeordnet ist.

3. Bearbeitungseinrichtung nach Anspruch 1 oder 2, **dadurch gekennzeichnet, daß** die Verstelleinrichtung (43) durch Schwenk- oder Linearantriebe betätigbar ausgebildet ist.

4. Bearbeitungseinrichtung nach einem oder mehreren der vorhergehenden Ansprüche, **dadurch gekennzeichnet, daß** der Vorrichtungsträger (32) als auf der Höhen- und/oder Seitenführung (30) fahrbar abgestützter Laufwagen (62) ausgebildet ist.

5. Bearbeitungseinrichtung nach einem oder mehreren der vorhergehenden Ansprüche, **dadurch gekennzeichnet, daß** die Bearbeitungsvorrichtung (36, 37, 54) ein Trägerelement (42) aufweist, auf dem zumindest eine Werkzeugspindel (40, 65) mit einer Spanneinrichtung für ein Bearbeitungswerkzeug (38) drehbar gelagert ist, die mit einem Antriebsmotor (41) antriebsverbunden ist.

6. Bearbeitungseinrichtung nach einem oder mehreren der vorhergehenden Ansprüche, **dadurch gekennzeichnet, daß** das Trägerelement (42) über eine Führungsanordnung auf dem Vorrichtungsträger (32) verstellbar gelagert ist.

7. Bearbeitungseinrichtung nach einem oder mehreren der vorhergehenden Ansprüche, **dadurch gekennzeichnet, daß** eine Mittelachse der Werkzeugspindel (40, 65) in etwa parallel zur Auflagefläche (5) und zu einer Vorschubrichtung der Bearbeitungsvorrichtung (36, 37, 54) senkrechten Richtung verlaufend angeordnet ist.

8. Bearbeitungseinrichtung nach einem oder mehreren der vorhergehenden Ansprüche, **dadurch gekennzeichnet, daß** die Mittelachse der Werkzeugspindel (40, 65) zur Auflagefläche (5) winkelig verlaufend angeordnet ist.

9. Bearbeitungseinrichtung nach einem oder mehreren der vorhergehenden Ansprüche, **dadurch gekennzeichnet, daß** die Höhen- und/oder Seitenführung (30) für den Laufwagen (62) und/oder den Vorrichtungsträger (32) durch im Maschinengestell (4) angeordnete Führungsbahnen (35) gebildet ist.

10. Bearbeitungseinrichtung nach einem oder mehreren der vorhergehenden Ansprüche, **dadurch gekennzeichnet, daß** die Höhen- und/oder Seitenführung (30) durch am Profil (29) angeordnete Führungsstangen (58, 59) gebildet ist, auf denen der Laufwagen (62) und/oder Vorrichtungsträger (32) mit unterschiedlichen Arten von Längsführungen ausgeführt werden kann.

11. Bearbeitungseinrichtung nach einem oder mehreren der vorhergehenden Ansprüche, **dadurch gekennzeichnet, daß** die Bearbeitungsvorrichtungen (36, 37, 54) in Vorschubrichtung zueinander beabstandet und mit zueinander parallel verlaufenden Mittelachsen der Werkzeugspindeln (40, 65) am Vorrichtungsträger (32) und/oder Laufwagen (62) angeordnet sind.

12. Bearbeitungseinrichtung nach einem oder mehreren der vorhergehenden Ansprüche, **dadurch gekennzeichnet, daß** das Maschinengestell (4) mit einer weiteren oberhalb der Auflagefläche (5) und zur Höhen- und/oder Seitenführung (30) parallel verlaufenden Führungsanordnung versehen ist, auf der eine über den Laufwagen (62) verstellbare weitere Bearbeitungsvorrichtung (54) insbesondere eine Fräsvorrichtung (63) angeordnet ist.

13. Bearbeitungseinrichtung nach einem oder mehreren der vorhergehenden Ansprüche, **dadurch gekennzeichnet, daß** zur Aufnahme der Führungsanordnung parallel zur Auflagefläche und zu dieser beabstandet ein mit dem Maschinengestell (4) bewegungsfest verbundenes und in Richtung der Längserstreckung des Maschinengestells (4) verlaufendes Tragprofil (55) angeordnet ist.

14. Bearbeitungseinrichtung nach einem oder mehreren der vorhergehenden Ansprüche, **dadurch gekennzeichnet, daß** die weitere Bearbeitungsvorrichtung (54) über die Verstelleinrichtung (43) in zur Auflagefläche (5) senkrechten Richtung verstellbar ausgebildet ist.

15. Bearbeitungseinrichtung nach einem oder mehreren der vorhergehenden Ansprüche, **dadurch gekennzeichnet, daß** die Verstelleinrichtung (43) eine Wegemeßeinrichtung (44) aufweist.

16. Bearbeitungseinrichtung nach einem oder mehreren der vorhergehenden Ansprüche, **dadurch gekennzeichnet, daß** die weitere Bearbeitungsvorrichtung (54) eine drehbar gelagerte Werkzeugspindel (65) aufweist, die mit einem Antriebsmotor (64) drehbeweglich gekuppelt ist und bevorzugt eine Mittelachse (68) der Werkzeugspindel (65) parallel zur Auflagefläche (5) und in zur Vorschubrichtung der Bearbeitungsvorrichtung (54) senkrechten Richtung verläuft.

17. Bearbeitungseinrichtung nach einem oder mehreren der vorhergehenden Ansprüche, **dadurch gekennzeichnet, daß** der die weitere Bearbeitungsvorrichtung (54) aufweisende Laufwagen (62) mit der Antriebsvorrichtung des auf der Höhen- und/oder Seitenführung (30) im Maschinengestell (4) vefahrbaren Vorrichtungsträger (32) antriebsverbunden ist.

18. Bearbeitungseinrichtung nach einem oder mehreren der vorhergehenden Ansprüche, **dadurch gekennzeichnet, daß** der Laufwagen (62) der weiteren Bearbeitungsvorrichtung (54) mit einem Einzelantrieb bestückt ist.

19. Bearbeitungseinrichtung nach einem oder mehreren der vorhergehenden Ansprüche, **dadurch gekennzeichnet, daß** die Vorschubvorrichtung für das Werkstück (3) durch einen in zur Längserstreckung des Maschinengestells (4) senkrechten Richtung verstellbar geführten und mit einer Antriebsvorrichtung verbundenen und Spannzangen (26) für das Werkstück (3) aufweisenden Schieber (24) gebildet ist, auf dem verstellbare Anschläge (28) für das Werkstück (3) angeordnet sind.

20. Bearbeitungseinrichtung nach einem oder mehreren der vorhergehenden Ansprüche, **dadurch gekennzeichnet, daß** die Niederhalteeinrichtung (15) eine mit der Kontroll- und/oder Steuereinrichtung (45) leitungsverbundene Dickenmeßeinrichtung (47) aufweist.

21. Bearbeitungseinrichtung nach einem oder mehreren der vorhergehenden Ansprüche, **dadurch gekennzeichnet, daß** ein Antrieb der Verstelleinrichtung (43) der Bearbeitungsvorrichtung (36, 37, 54) durch mit einem Druckmedium beaufschlagten Stelltrieb gebildet ist.

22. Bearbeitungseinrichtung nach einem oder mehreren der vorhergehenden Ansprüche, **dadurch gekennzeichnet, daß** der Antrieb der Verstelleinrichtung (43) durch einen elektromotorisch betriebenen Linearantrieb z.B. einen Spindeltrieb gebildet ist.

## Claims

1. Treatment device (1) for panel-shaped workpieces (3), in particular a panel-cutting saw, with a machine frame (4) serving as a support surface (5) for the workpieces (3), and a retaining mechanism (15) which can be adjusted in the direction perpendicular to the support surface (5), and a feed device for the workpieces (3) incorporating a clamping device for the workpieces (3) which is adjustable in a plane parallel with the support surface (5), and at least one device mount (32) which can be linearly displaced in the machine frame (4) on a height and/or lateral guide track (30), with a processing device (36, 37, 54) disposed on the device mount (32) such that it can be displaced in the direction perpendicular to the support surface (5), **characterised in that** at least two processing devices (36, 37, 54) are provided on the device mount (32) and can be displaced independently of one another and relative to one another in the direction perpendicular to the support surface (5) by means of adjusting mechanisms (43), at least one processing device being a milling device (39, 63), and the adjusting mechanisms (43) for the processing devices (36, 37, 54) have path-measuring units (44) wired to a monitoring and/or control system (45).

2. Treatment device as claimed in claim 1, **characterised in that** the device mount (32) is disposed on a carriage (62) displaceable on a height and/or lateral guide system (30) and can be adjusted in the direction perpendicular to the support surface (5) by the adjusting mechanism (43).

3. Treatment device as claimed in claim 1 or 2, **characterised in that** the adjusting mechanism (43) comprises pivoting or linear drives.

4. Treatment device as claimed in one or more of the preceding claims, **characterised in that** the device mount (32) is a carriage (62) which is displaceably supported on the height and/or lateral guide system (30).

5. Treatment device as claimed in one or more of the preceding claims, **characterised in that** the processing device (36, 37, 54) has a support element (42) on which at least one tool spindle (40, 65) with a clamping device for a processing tool (38) is rotatably mounted and drivingly linked to a drive motor (41).

6. Treatment device as claimed in one or more of the preceding claims, **characterised in that** the support element (42) is mounted so as to be displaceable on the device mount (32) by means of a guide system.

7. Treatment device as claimed in one or more of the preceding claims, **characterised in that** a mid-axis of the tool spindle (40, 65) extends more or less parallel with the support surface (5) and perpendicular to a feed direction of the processing device (36, 37, 54).

8. Treatment device as claimed in one or more of the preceding claims, **characterised in that** the mid-axis of the tool spindle (40, 65) extends at an angle to the support surface (5).

9. Treatment device as claimed in one or more of the preceding claims, **characterised in that** the height and/or lateral guide system (30) for the carriage (62) and/or the device mount (32) is provided in the form of guide tracks (35) in the machine frame (4).

10. Treatment device as claimed in one or more of the preceding claims, **characterised in that** the height and/or lateral guide system (30) comprises guide rails (58, 59) on a section (29), on which the carriage (62) and/or device mount (32) can be fitted with different types of longitudinal guides.

11. Treatment device as claimed in one or more of the preceding claims, **characterised in that** the processing devices (36, 37, 54) are spaced apart from one another in the feed direction and are disposed on the device mount (32) and/or carriage (62) with the mid-axes of the tool spindles (40, 65) extending parallel with one another.

12. Treatment device as claimed in one or more of the preceding claims, **characterised in that** the machine frame (4) is provided with another guide system extending above the support surface (5) and parallel with the height and/or lateral guide system (30),on which another processing device (54), in particular a milling device, (63) can be displaced by means of the carriage (62).

13. Treatment device as claimed in one or more of the preceding claims, **characterised in that** a supporting section (55) fixedly connected to the machine frame (4) and extending in the direction of the longitudinal extension of the machine frame (4) is provided as a means of receiving the guide system parallel with the support surface and at a distance apart from it.

14. Treatment device as claimed in one or more of the preceding claims, **characterised in that** the other processing device (54) is displaceable in the direction perpendicular to the support surface (5) by means of the adjusting mechanism (43).

15. Treatment device as claimed in one or more of the preceding claims, **characterised in that** the adjusting mechanism (43) has a path-measuring unit (44).

16. Treatment device as claimed in one or more of the preceding claims, **characterised in that** the other processing device (54) has a rotatably mounted tool spindle (65) which is rotatably linked to a drive motor (64), and a mid-axis (68) of the tool spindle (65) preferably extends parallel with the support surface (5) and perpendicular to the feed direction of the processing device (54).

17. Treatment device as claimed in one or more of the preceding claims, **characterised in that** the carriage (62) incorporating the other processing device (54) is drivingly linked to the drive system of the device mount (32) which is displaceable in the machine frame (4) on the height and/or lateral guide system (30).

18. Treatment device as claimed in one or more of the preceding claims, **characterised in that** the carriage (62) of the other processing device (54) is fitted with an individual drive.

19. Treatment device as claimed in one or more of the preceding claims, **characterised in that** the feed device for the workpiece (3) comprises a slide (24) which is displaceably guided in the direction perpendicular to the longitudinal extension of the machine frame (4) and is connected to a drive system and has clamping jaws (26) for the workpiece (3), on which adjustable stops (28) are provided for the workpiece (3).

20. Treatment device as claimed in one or more of the preceding claims, **characterised in that** the retaining mechanism (15) has a thickness-measuring unit (47) wired to a monitoring and/or control system (45).

21. Treatment device as claimed in one or more of the preceding claims, **characterised in that** a drive of the adjusting mechanism (43) of the processing device (36, 37, 54) is provided in the form of an actuator which is pressurised by a pressurising medium.

22. Treatment device as claimed in one or more of the preceding claims, **characterised in that** the drive of the adjusting mechanism (43) is provided in the form of a linear drive, e.g. a spindle drive, operated by an electric motor.

## Revendications

1. Dispositif d'usinage (1) pour des pièces en forme de plaque (3) en particulier scie de séparation de plaques, avec un bâti de machine (4) formant une face d'application (5) pour les pièces (3) et avec une installation de maintien bas (15) ajustable relativement à la face d'application (5) dans la direction verticale et un dispositif de poussée pourvu d'un dispositif de serrage des pièces (3), ajustable dans un plan s'étendant parallèlement à la face d'application (5) pour les pièces (3) et avec au moins un support de dispositif (32) déplaçable linéairement dans le bâti de machine (4) sur une voie de guidage en hauteur et/ou latérale (30) et un dispositif d'usinage (36, 37, 54) disposé d'une manière déplaçable dans la direction perpendiculaire à la face d'application (5) sur le support de dispositif (32), **caractérisée en ce que** sont disposés au support de dispositif (32) au moins deux dispositifs d'usinage (36, 37, 54) ajustables par des installations de déplacement (43) dans la direction perpendiculaire à la face d'application (5) indépendamment l'un de l'autre et l'un relativement à l'autre, dont au moins un dispositif d'usinage est réalisé comme dispositif à fraiser (39, 63), et les installations de déplacement (43) des dispositifs d'usinage (36, 37, 54) présentent des installations de mesure de déplacement (44) reliées par des lignes à une installation de contrôle et/ou de commande (45).

2. Dispositif d'usinage selon la revendication 1, **caractérisée en ce que** le support de dispositif (32) est disposé d'une manière ajustable sur un chariot (62) déplaçable sur un guidage en hauteur et/ou latéral (30) dans la direction perpendiculaire à la face d'application (5) par l'installation de déplacement (43).

3. Dispositif d'usinage selon la revendication 1 ou 2, **caractérisée en ce que** l'installation de déplacement (43) est réalisée de façon à pouvoir être actionnée par des commandes de pivotement ou des commandes linéaires.

4. Dispositif d'usinage selon l'une ou plusieurs des revendications précédentes, **caractérisée en ce que** le support de dispositif (32) est réalisé comme chariot (62) supporté d'une manière déplaçable sur le guidage en hauteur et/ou latéral (30).

5. Dispositif d'usinage selon l'une ou plusieurs des revendications précédentes, **caractérisée en ce que** le dispositif d'usinage (36, 37, 54) présente un élément de support (42) sur lequel est logé d'une manière tournante au moins une broche d'outil (40, 65) avec une installation de serrage pour un outil d'usinage (38), qui est en liaison d'entraînement avec un moteur d'entraînement (41 ).

6. Dispositif d'usinage selon l'une ou plusieurs des revendications précédentes, **caractérisée en ce que** l'élément de support (42) est logé d'une manière ajustable par un agencement de guidage sur le support de dispositif (32).

7. Dispositif d'usinage selon l'une ou plusieurs des revendications précédentes, **caractérisée en ce qu'**un axe médian de la broche d'outil (40, 65) est disposé pour s'étendre à peu près parallèlement à la face d'application (5) et à une direction perpendiculaire à une direction de poussée du dispositif d'usinage (36, 37, 54).

8. Dispositif d'usinage selon l'une ou plusieurs des revendications précédentes, **caractérisée en ce que** l'axe médian de la broche d'outil (40, 65) est disposé pour s'étendre selon un angle à la face d'application (5).

9. Dispositif d'usinage selon l'une ou plusieurs des revendications précédentes, **caractérisée en ce que** le guidage en hauteur et/ou latéral (30) pour le chariot (62) et/ou le support de dispositif (32) est formé par des voies de guidage (35) disposées dans le bâti de machine (4).

10. Dispositif d'usinage selon l'une ou plusieurs des revendications précédentes, **caractérisée en ce que** le guidage en hauteur et/ou latéral (30) est formé par des tiges de guidage (58, 59) disposées au profilé (29), sur lesquelles le chariot (62) et/ou le support de dispositif (32) peut être réalisé avec des types de guidage longitudinaux différents.

11. Dispositif d'usinage selon l'une ou plusieurs des revendications précédentes, **caractérisée en ce que** les dispositifs d'usinage (36, 37, 54) sont espacés les uns des autres dans la direction de poussée et sont disposés avec des axes médians s'étendant parallèlement les uns aux autres des broches d'outil (40, 65) au support de dispositif (32) et/ou au chariot (62).

12. Dispositif d'usinage selon l'une ou plusieurs des revendications précédentes, **caractérisée en ce que** le bâti de machine (4) est pourvu d'un autre agencement de guidage s'étendant au-dessus de la face d'application (5) et parallèlement au guidage en hauteur et/ou latéral (30) sur lequel est disposé un autre dispositif d'usinage (54) déplaçable par le chariot (62), en particulier un dispositif à fraiser (63).

13. Dispositif d'usinage selon l'une ou plusieurs des revendications précédentes, **caractérisée en ce que** pour la réception de l'agencement de guidage parallèlement à la face d'application et espacé de celle-ci est disposé un profilé de support (55) relié de manière non déplaçable au bâti de machine (4) et s'étendant dans la direction de l'extension longitudinale du bâti de machine (4).

14. Dispositif d'usinage selon l'une ou plusieurs des revendications précédentes, **caractérisée en ce que** l'autre dispositif d'usinage (54) est réalisé d'une manière déplaçable par l'installation de déplacement (43) dans la direction perpendiculaire à la face d'application (5).

15. Dispositif d'usinage selon l'une ou plusieurs des revendications précédentes, **caractérisée en ce que** l'installation de déplacement (43) présente une installation de mesure de déplacement (44).

16. Dispositif d'usinage selon l'une ou plusieurs des revendications précédentes, **caractérisée en ce que** l'autre dispositif d'usinage (54) présente une broche d'outil (65) logée d'une manière tournante qui est couplée d'une manière mobile en rotation à un moteur d'entraînement (64), et de préférence un axe médian (68) de la broche d'outil (65) s'étend parallèlement à la face d'application (5) et dans la direction perpendiculaire à la direction de poussée du dispositif d'usinage (54).

17. Dispositif d'usinage selon l'une ou plusieurs des revendications précédentes, **caractérisée en ce que** le chariot (62) présentant l'autre dispositif d'usinage (54) est relié quant à son entraînement au dispositif d'entraînement du support de dispositif (32) déplaçable sur le guidage en hauteur et/ou latéral (30) dans le bâti de machine (4).

18. Dispositif d'usinage selon l'une ou plusieurs des revendications précédentes, **caractérisée en ce que** le chariot (62) de l'autre dispositif d'usinage (54) est pourvu d'un dispositif d'entraînement individuel.

19. Dispositif d'usinage selon l'une ou plusieurs des revendications précédentes, **caractérisée en ce que** le dispositif de poussée de la pièce (3) est formé par un poussoir (24) guidé d'une manière déplaçable dans la direction perpendiculaire à l'extension longitudinale du bâti de machine (4) et relié à un dispositif d'entraînement et présentant des pinces de serrage (26) pour la pièce (3), sur lequel sont disposées des butées déplaçables (28) pour la pièce (3).

20. Dispositif d'usinage selon l'une ou plusieurs des revendications précédentes, **caractérisée en ce que** l'installation de maintien bas (15) présente une installation de mesure d'épaisseur (47) reliée par des lignes à l'installation de contrôle et/ou de commande (45).

21. Dispositif d'usinage selon l'une ou plusieurs des revendications précédentes, **caractérisée en ce qu'**un entraînement du dispositif de déplacement (43) du dispositif d'usinage (36, 37, 54) est formé par une commande de positionnement chargée par un milieu sous pression.

22. Dispositif d'usinage selon l'une ou plusieurs des revendications précédentes, **caractérisée en ce que** l'entraînement de l'installation de déplacement (43) est formé par un dispositif d'entraînement linéaire à commande électromotrice, par exemple une commande à broche.
